# EUROPÄISCHE PATENTSCHRIFT

(11) **EP 3 959 094 B1**
(45) Veröffentlichungstag und Bekanntmachung des Hinweises auf die Patenterteilung: **07.06.2023**
(21) Anmeldenummer: 20721578.1
(22) Anmeldetag: 24.04.2020
(51) Int. Cl.: B60J 10/00, B23P 19/04

(54) **VERFAHREN UND ANLAGE ZUM HERSTELLEN EINER DICHTUNG**
METHOD AND SYSTEM FOR PRODUCING A SEAL
PROCÉDÉ ET INSTALLATION DE FABRICATION D'UN JOINT D'ÉTANCHÉITÉ

(30) Priorität: 26.04.2019 DE 102019206043
(43) Veröffentlichungstag der Anmeldung: 02.03.2022
(73) Patentinhaber: VOLKSWAGEN AKTIENGESELLSCHAFT, 38440 Wolfsburg (DE)
(72) Erfinder: DINH, Van Khoa, 38448 Wolfsburg (DE); SCHNEIDER, Ralph, 38158 Gifhorn (DE)
(74) Vertreter: Clarenbach, Carl-Philipp
(86) Internationale Anmeldenummer: PCT/EP2020/061516
(87) Internationale Veröffentlichungsnummer: WO 2020/216931

(56) Entgegenhaltungen:
- EP-A1- 1 733 839
- DE-A1-102010 026 669
- DE-A1-102013 114 775

## Beschreibung

Die Erfindung betrifft ein Verfahren zum Herstellen einer Dichtung, insbesondere für eine Tür oder einen Türrahmen eines Kraftfahrzeugs, mit folgenden Schritten: Bereitstellen eines ablängbaren Dichtelements, Prüfen des Dichtelements auf Fehlerstellen, Markieren jeder erkannten Fehlerstelle an dem Dichtelement, Entfernen von jedem zumindest eine Markierung aufweisenden Längsabschnitt des Dichtelements und Ablängen des Dichtelements auf eine gewünschte Länge.

Weiterhin betrifft die Erfindung eine Anlage zum Herstellen einer Dichtung für eine Tür oder einen Türrahmen eines Kraftfahrzeugs, insbesondere zur Durchführung des obenstehend beschriebenen Verfahrens, wobei die Anlage eine erste Prüfeinrichtung zum Erkennen von Fehlerstellen in oder an einem strangförmigen, ablängbaren Dichtelement sowie eine Markiereinrichtung zum Markieren jeder erkannten Fehlerstelle des Dichtelements an dem Dichtelement, eine zweite Prüfeinrichtung zum Erfassen der jeweiligen Markierung sowie eine Reparatureinrichtung zum Entfernen von jedem zumindest eine Fehlerstellen-Markierung aufweisenden Längsabschnitt des Dichtelements aufweist.

Verfahren und Anlagen der eingangs genannten Art sind aus dem Stand der Technik bereits bekannt. So offenbart beispielsweise die Offenlegungsschrift EP 1 733 839 A1 ein Verfahren zur Bildung einer Dichtung an einem Dichtungsträger, insbesondere an einer Fahrzeugtür oder einem Karosserieausschnitt, wobei ein die Dichtung bildendes Strangmaterial von einer Rolle oder Wicklung abgewickelt, das abgewickelte Strangmaterial dem genannten Träger zugeführt, in Stranglängsrichtung fortlaufend mit dem Träger verbunden und ein der Länge der Dichtung entsprechender Endabschnitt von dem zugeführten Strangmaterial durch eine Trenneinrichtung abgelängt wird. Außerdem werden das abgewickelte Strangmaterial vor dem Verbinden mit dem Träger durch eine Prüfeinrichtung auf Fehlerstellen geprüft, als fehlerhaft ermittelte Endabschnitte des Strangmaterials abgetrennt und als Abfall ausgesondert. Um das gezielte Entfernen von Strangabschnitten zu ermöglichen, werden als fehlerhaft erkannte Abschnitte, also Längsabschnitte mit Fehlerstellen, markiert.

Der Erfindung liegt die Aufgabe zugrunde, ein verbessertes Verfahren und eine verbesserte Anlage zu schaffen, welche eine dauerhaft und sicher erkennbare Markierung auf dem Dichtelement gewährleisten, um ein zielsicheres Entfernen von fehlerhaften Längsabschnitten des Dichtelements zu ermöglichen, sodass dann die durch das Dichtelement an der Tür oder an dem Türrahmen gebildete Dichtung die gewünschte Dichtwirkung dauerhaft gewährleistet.

Die der Erfindung zugrundeliegende Aufgabe wird durch ein Verfahren mit den Merkmalen des Anspruchs 1 gelöst. Dieses hat den Vorteil, dass die jeweilige Fehlerstelle dauerhaft und deutlich markiert wird, sodass im weiteren Verfahren die Markierung sicher erkannt und das Dichtelement durch Entfernen des die Markierung aufweisenden Längsabschnitts sicher repariert wird. Erfindungsgemäß wird dies dadurch erreicht, dass zum Markieren der jeweils erkannten Fehlerstelle ein in dem Längsabschnitt des Dichtelements, in welchem die jeweilige Fehlerstelle erkannt wurde, liegender Bereich des Dichtelements, der im Querschnitt des Dichtelements kleiner ist als der Querschnitt des Dichtelements, entfernt wird. Die Erfindung sieht also vor, dass zum Markieren ein Bereich des Dichtelements zur Markierung der Fehlerstelle entfernt wird. Dabei wird gezielt ein Bereich entfernt, der in dem Längsabschnitt des Dichtelements liegt, in welchem auch die jeweilige Fehlerstelle erkannt wurde. Dabei erfolgt das Entfernen des Bereichs derart, dass das Dichtelement in Längserstreckung zumindest im Wesentlichen erhalten bleibt, sodass keine Durchtrennung des Dichtelements durch die Markierung erfolgt. Das Dichtelement bleibt somit auch nach dem Entfernen des gewählten Bereichs insbesondere als Strangprofil oder Strangmaterial erhalten. Durch das Entfernen des Bereichs wird jedoch die Fehlerstelle eindeutig markiert, sodass sie durch einen nachgelagerten weiteren Prüfvorgang einfach feststellbar beziehungsweise erkennbar ist, beispielsweise auch dann, wenn zwischen dem Markieren der Fehlerstelle und der weiteren Verwendung des Dichtelements ein großer Zeitraum, beispielsweise von mehreren Tagen, Wochen oder Monaten, liegt. Durch die Markierung mittels der Entfernung eines Bereichs vom Material des Dichtelements wird erreicht, dass die Markierung dauerhaft vorhanden ist und durch einen weiteren Prüfprozess auch in kurzer Zeit sicher erkannt werden kann.

Bevorzugt wird der Bereich unabhängig von der jeweils erfassten Fehlerstelle mit einer vorgegebenen Mindestgröße entfernt. Der zu entfernende oder entfernte Bereich weist somit eine Mindestgröße auf, die unabhängig von der jeweils erfassten Fehlerstelle vorgegeben ist. Durch die Mindestgröße wird sichergestellt, dass im nachgelagerten Prüfschritt die Markierung in jedem Fall sicher erkennbar ist. So wird beispielsweise stets ein kreisförmiger Bereich mit einem vorgegebenen Mindestdurchmesser oder Radius aus dem Dichtelement entfernt.

Weiterhin ist bevorzugt vorgesehen, dass unabhängig von der jeweils erfassten Fehlerstelle im Querschnitt des Dichtelements der gleiche Bereich entfernt wird. Damit wird unabhängig davon, in welchem Längsabschnitt sich die Fehlerstelle befindet, stets im Querschnitt des Dichtelements gesehen der gleiche Bereich beziehungsweise Querschnittsbereich entfernt. Dies vereinfacht die nachfolgende Prüfung dahingehend, dass das Dichtelement nicht vollumfänglich auf das Vorhandensein der Markierung oder Markierungen überwacht werden muss. Vielmehr wird dann davon ausgegangen, dass die Markierung, so sie denn vorhanden ist, sich in einem vorbestimmten Bereich befindet, beispielsweise auf der einen oder der anderen Längsseite, im Fußbereich oder im Kopfbereich des Dichtelements. Dadurch wird der Aufwand zum Prüfen des Dichtelements auf Markierungen minimiert ebenso wie der Aufwand zum Erstellen der jeweiligen Markierung. Dadurch ergeben sich Kosten- sowie Effizienzvorteile bei der Herstellung der Dichtung.

Weiterhin ist bevorzugt vorgesehen, dass nur der die jeweilige Fehlerstelle aufweisende Bereich des Dichtelements im Querschnitt des Dichtelements entfernt wird. Damit ist die Lage des entfernten Bereichs beziehungsweise die Anordnung im Querschnitt des Dichtelements abhängig von der jeweils erfassten Fehlerstelle, wodurch eine besonders zielgenaue Markierung der Fehlerstelle in vorteilhafter Weise erfolgt. Hierdurch ergibt sich beispielsweise auch der Vorteil, dass dann, wenn die Fehlerstelle in einem unkritischen Bereich des Dichtelements liegt, diese als unkritisch bewertet werden kann, sodass ein Entfernen des diese Fehlerstelle aufweisenden Längsabschnitts unterbleibt. Hierdurch werden Ausschuss und Materialkosten reduziert. Optional werden zur Markierung der erkannten Fehlerstelle in dem zugehörigen Längsabschnitt des Dichtelements mehrere Bereiche des Dichtelements entfernt, um beispielsweise zu ermöglichen, dass im nachgelagerten Prüfschritt die Überwachung des Dichtelements auf Markierungen an nur einer Seite des Dichtelements ausreicht, um den markierten Längsabschnitt des Dichtelements zu erfassen. So wird die jeweilige Fehlerstelle beispielsweise an beiden Längsseiten des Dichtelements, an allen vier Seiten des Dichtelements oder nur an Ober- und Unterseite des Dichtelements, oder an einer Längsseite und einer Unterseite, oder einer Längsseite und einer Oberseite oder dergleichen markiert. Auch kann das Dichtelement an mehr als nur zwei Seiten - im Querschnitt gesehen - markiert werden.

Gemäß einer bevorzugten Weiterbildung der Erfindung wird der ausgewählte Bereich durch Stanzen entfernt. Hierdurch ist eine einfacher und zeitsparender Schritt zum Markieren des Dichtelements beziehungsweise der Fehlerstelle des Dichtelements vorgesehen.

Gemäß einer weiteren Ausführungsform der Erfindung wird der Bereich durch Schneiden entfernt. Hierdurch ist ein präzises, insbesondere in Bezug auf eine Größe des Bereichs variierendes Verfahren zum Markieren des Dichtelements geboten.

Insbesondere wird der Bereich durch Wasserschneiden, Laserschneiden oder mechanisches Schneiden entfernt. Dadurch ist kostengünstig und verlässlich der Bereich an dem Dichtelement entfernbar.

Weiterhin ist bevorzugt vorgesehen, dass der Bereich durch einen Bohr- oder Fräsvorgang entfernt wird. Hierdurch ist ein besonders gezieltes Entfernen des Bereichs, gegebenenfalls auch in unterschiedlichen Größen, insbesondere in Abhängigkeit von der Größe der jeweiligen Fehlerstelle vorteilhaft ermöglicht.

Insbesondere werden durch das nachträgliche Herausschneiden des eine Markierung aufweisenden Längsabschnitts des Dichtelements beziehungsweise des Strangmaterials verbleibende freie Enden des Dichtelements miteinander verbunden, bevor das Dichtelement abgelängt wird. Durch das Entfernen des Längsabschnitts, in welchem die Fehlerstelle erkannt wurde, wird das Dichtelement an zwei Stellen durchtrennt, sodass der zwischen den Trennstellen liegende Längsabschnitt entfernt werden kann, und die dadurch entstehenden freien Enden des Dichtelements, die einander zugewandt sind, miteinander verbunden werden, um das Dichtelement in Längserstreckung wieder zu schließen. Dadurch bleibt die strangförmige Ausbildung des Dichtelements erhalten und das Dichtelement kann beispielsweise nach erfolgtem Markieren oder nach erfolgtem Entfernen des eine Fehlerstelle aufweisenden Längsabschnitts wieder aufgerollt und später zur Herstellung einer Dichtung beziehungsweise für das Ablängen bereitgestellt werden.

Die erfindungsgemäße Anlage mit den Merkmalen des Anspruchs 10 ist insbesondere dazu ausgebildet, das erfindungsgemäße Verfahren auszuführen. Hierzu zeichnet sich die Anlage dadurch aus, dass die Markierungseinrichtung dazu ausgebildet ist, zur Markierung der jeweils erkannten Fehlerstelle einen in dem Längsabschnitt des Dichtelements, in welchem die jeweilige Fehlerstelle erkannt wurde, liegenden Bereich des Dichtelements, der im Querschnitt des Dichtelements kleiner als der Querschnitt des Dichtelements ist, zu entfernen. Es ergeben sich dadurch die bereits genannten Vorteile. Insbesondere weist die Vorrichtung außerdem eine Applikationsvorrichtung auf, welche dazu ausgebildet ist, das Dichtelement auf eine gewünschte Länge abzulängen und auf eine Tür oder einen Türrahmen eines Kraftfahrzeugs anzubringen.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: eine vorteilhafte Anlage zum Herstellen einer Dichtung an einer Tür oder einem Türrahmen eines Kraftfahrzeugs,
- Figur 2: einen Querschnitt durch ein die Dichtung bildendes Dichtelement, und
- Figuren 3A bis 3D: unterschiedliche Ausführungsbeispiele eines vorteilhaften Verfahrens zum Herstellen der Dichtung, jeweils anhand eines Querschnitts des Dichtelements.

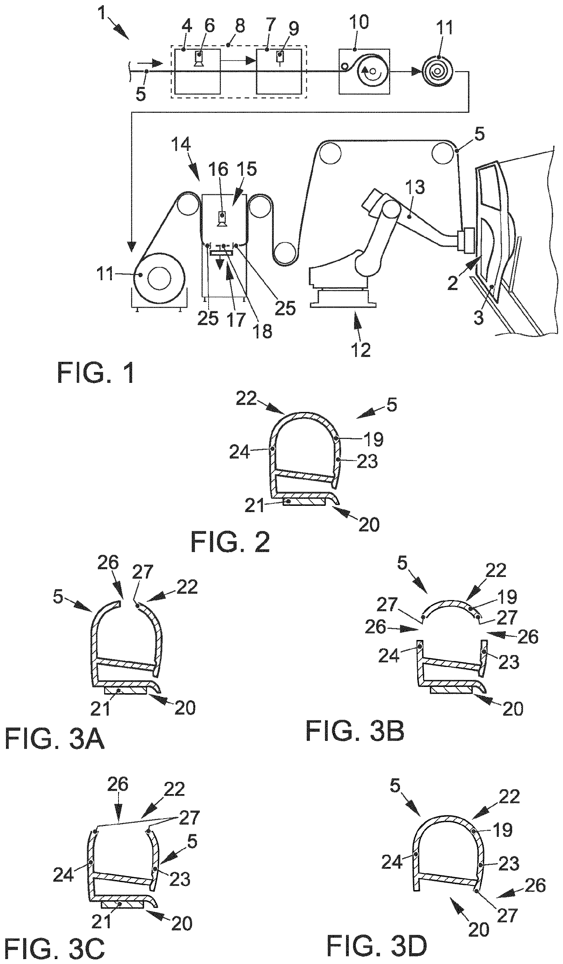

Figur 1 zeigt in einer vereinfachten Darstellung eine Anlage 1 zum Herstellen einer Dichtung 2 an einer Tür 3 eines hier nicht näher dargestellten Kraftfahrzeugs. Die Anlage 1 weist mehrere Einrichtungen auf, die in einer Herstellungslinie stehen oder auch getrennt voneinander, beispielsweise in unterschiedlichen Fabrikhallen oder dergleichen, vorliegen können. Die Anlage 1 ist insbesondere in zwei Teile geteilt, wobei ein erster Teil die Bereitstellung eines markierten strangförmigen Dichtelements betrifft und der zweite Teil die Applikation beziehungsweise Montage des Dichtelements zur Bildung der Dichtung 2 an der Tür 3.

Der erste Teil der Anlage 1 weist eine erste Prüfeinrichtung 4 auf, welcher ein strangförmiges Dichtelement 5, das insofern auch als Endlosdichtelement bezeichnet werden kann, zugeführt wird. Die Prüfeinrichtung 4 weist Mittel, insbesondere eine Kamera 6, auf, mittels derer das Dichtelement 5 auf das Vorliegen von Fehlerstellen, wie beispielsweise Rissen, Materialschwund oder dergleichen, untersucht werden kann. Insbesondere weist die Prüfeinrichtung 4 mehrere Kameras 6 auf, um das Dichtelement 5 an mehreren unterschiedlichen Seiten, insbesondere gleichzeitig erfassen zu können, sodass jede Fehlerstelle erkannt wird.

Anschließend wird das Dichtelement 5 einer Markiereinrichtung 7 zugeführt, welche die zuvor erkannte Fehlerstelle an dem Dichtelement 5 mit einer dauerhaften Markierung 26 versieht. Die Markiereinrichtung 7 kann zusammen mit der Prüfeinrichtung 4 als eine erste Einheit 8 ausgebildet sein, sodass zum Erfassen einer Fehlerstelle zum Markieren dieser Fehlerstelle das Dichtelement 5 nicht verschoben oder von einer Einrichtung zur nächsten bewegt werden muss. Wird durch die Kameraeinrichtung 6 eine Fehlerstelle erkannt, wird die Kamera 6 durch eine Werkzeugeinrichtung 9 der Markiereinrichtung 7 ersetzt, sodass die erkannte Fehlerstelle durch die Werkzeugeinrichtung 9 bearbeitbar ist, wie im Folgenden näher beschrieben werden soll. Sind die Einrichtungen 4 und 7 jedoch getrennt voneinander ausgebildet beziehungsweise beabstandet voneinander angeordnet, sodass das Dichtelement 5 von der einen zur anderen geführt werden muss, so wird die zuvor markierte Fehlerstelle durch die Einrichtung 4 gespeichert und in Abhängigkeit der Fördergeschwindigkeit des Dichtelements 5 die Position der Fehlerstelle bezogen auf die Anordnung der Werkzeugeinrichtung 9 überwacht, bis die Fehlerstelle der Werkzeugeinrichtung 9 gegenüberliegt, sodass diese nunmehr den die Fehlerstelle aufweisenden Längsabschnitt des Dichtelements 5 bearbeiten kann. Durch die Werkzeugeinrichtung 9 wird die Fehlerstelle beziehungsweise das Dichtelement 5 in dem Längsabschnitt der Fehlerstelle derart bearbeitet, dass ein Bereich 27 des Dichtelements 5 entfernt wird, wie insbesondere in Bezug auf Figuren 3A bis 3D später näher erläutert werden soll. Es findet in jedem Fall eine optisch einfach erkennbare Bearbeitung des Dichtelements 5 statt, die auch nach einer längeren Standzeit des Dichtelements 5 nicht verschwindet und auch nicht abgewaschen oder durch Schmutzablagerung verdeckt werden kann.

Nach erfolgter Markierung wird das Dichtelement 5 weiter zu einer Sammeleinrichtung 10 geführt, die insbesondere als Aufrolleinrichtung ausgebildet ist, auf welcher das Dichtelement 5 insbesondere mit einer vorbestimmten Länge aufgerollt wird. Die so erzeugte Wickelrolle 11 wird dem zweiten Teil der Anlage 1 zugeführt. Dort wird das nunmehr markierte Dichtelement 5 als Strangelement in Form der Wickelrolle 11 zur Verfügung gestellt, von welcher das Dichtelement 5 nunmehr abgerollt wird, um einer Applikationseinrichtung 12 zugeführt zu werden, welche beispielsweise mithilfe eines beweglichen oder gelenkigen Roboterarms 13 das Dichtelement 5 zu der Tür 3 führt, an dieser befestigt und auf einer vorgegebenen Länge ablängt, um die Dichtung 2 zu bilden.

Bevor jedoch das Dichtelement 5 der Applikationseinrichtung 12 zugeführt wird, durchläuft das Dichtelement 5 eine Reparatureinrichtung 14, die eine weitere Prüfeinrichtung 15, mit insbesondere einer Kameraeinrichtung 16 sowie eine Trenneinrichtung 17 aufweist.

Die Kameraeinrichtung 16 ist dazu ausgebildet, die zuvor erstellte Markierung 26 des Dichtelements 5 zu erfassen. Vorzugsweise wird die Markierung 26 durch die Markiereinrichtung 7 stets an der gleichen Stelle des Dichtelements 5, im Querschnitt des Dichtelements 5 gesehen, hergestellt, sodass lediglich eine Kamera 16 notwendig ist, um die Markierung des Dichtelements 5 sicher zu erfassen.

Die Trenneinrichtung 17 ist dazu ausgebildet, einen Längsabschnitt 18 des Dichtelements 5 aus dem Dichtelement 5 herauszuschneiden und die dann verbleibenden freien Enden des Dichtelements 5 miteinander zu fügen, sodass die Strangform des Dichtelements 5 wieder hergestellt ist. Dies ist in Figur 1 vereinfacht gezeigt. Zum Heraustrennen weist die Trenneinrichtung 17 beispielsweise ein oder mehrere Schneidmesser auf, mittels derer das Dichtelement 5 an zwei Stellen vollständig durchtrennbar ist, sodass der zwischen den Trennstellen liegende Längsabschnitt 18 entfernt werden kann. Anschließend werden die nun freien Enden 25 des verbleibenden Dichtelements 5 zusammengeführt und beispielsweise miteinander verschweißt oder auf einfache Art und Weise miteinander verbunden, sodass die Strangform weitergeführt wird.

Durch die vorherige vorteilhafte Markierung 26 wird gewährleistet, dass der Längsabschnitt, an welchem eine Fehlerstelle in dem Dichtelement 5 vorhanden ist, sicher und dauerhaft derart markiert ist, das die Markierung von der Prüfeinrichtung 14 sicher und schnell erfassbar ist.

Figur 2 zeigt ein Ausführungsbeispiel des Dichtelements 5 in einer Querschnittsdarstellung. Das Dichtelement 5 weist insbesondere mehrere Abschnitte auf und ist insgesamt einstückig ausgebildet in der Art eines Strangprofils, insbesondere Strangpressprofils oder Extrusionsprofils. Gemäß diesem Ausführungsbeispiel weist das Dichtelement 5 ein U-förmiges Dichtende 19 auf, das dazu dient, gegen einen Türrahmen gedrückt und elastisch verformt zu werden, um eine flächige Anlage an dem Türrahmen zu erreichen, der die Dichtung 2 mit ausbildet. Das Dichtelement 5 ist dazu als Hohlkörper ausgebildet, der elastisch verformbar ist. Als weiteren Abschnitt weist das Dichtelement 5 einen Dichtelementfuß 20 auf, der als Träger des Dichtelements 5 an der Tür 2 dient. So ist der Träger beispielsweise bereichsweise in eine dafür vorgesehene Vertiefung der Tür 2 mit einem entsprechenden Haltevorsprung 21 formschlüssig einsetzbar, und beispielsweise einschweißbar oder einklebbar, um eine sichere Arretierung des Dichtelements 5 an der Tür 2 zu gewährleisten.

Durch die Markierungseinrichtung 7 wird nunmehr, wie vorstehend bereits erläutert, zumindest ein Bereich 27 des Dichtelements 5 im Querschnitt entfernt, wie anhand von Ausführungsbeispielen von Figuren 3A bis 3D gezeigt.

Dabei wird stets ein Bereich 27 entfernt, der kleiner ist als der Querschnitt des Dichtelements 5 selbst, sodass in Längserstreckung gesehen, das Dichtelement 5 zumindest im Wesentlichen erhalten bleibt und nur über einen kurzen Längsabschnitt hinweg durch den entfernten Bereich 27 in nur einem Teil des Querschnitts unterbrochen ist, sodass die Strangform des Dichtelements 5 aufrecht erhalten und damit die Handhabbarkeit beziehungsweise Handhabung des Dichtelements 5 erhalten bleibt. Insbesondere ist dadurch weiterhin ein Aufrollen und Abrollen des Dichtelements 5 als Strangprofil oder Strangelement gewährleistet.

Gemäß dem Ausführungsbeispiel von Figur 3A wird als Markierung 26 in dem die Fehlerstelle aufweisenden Längsabschnitt 18 ein Bereich 27 an der Spitze 22 des Dichtabschnitts 19 entfernt, in Figur 3A vertikal von oben.

Gemäß dem Ausführungsbeispiel von Figur 3B wird der Bereich 27 in einer Längsseite 23 und/oder 24 des Dichtelements 5 entfernt. Insbesondere werden in beiden Längsseiten 23, 24 jeweils ein Bereich 27 entfernt.

Insbesondere werden in den Ausführungsbeispielen von Figur 3A und 3B die Bereiche 27 mittels Bohren oder Fräsen aus dem Dichtelement 5 entfernt, wobei bei dem Ausführungsbeispiel gemäß Figur 3B beide Bereiche 27 beziehungsweise die Bereiche 27 in beiden Längsseiten 23, 24 durch einen einzigen Bohrvorgang entfernt werden können. Dazu liegen die Bereiche insbesondere fluchtend zueinander in dem Dichtelement 5.

Gemäß dem Ausführungsbeispiel von Figur 3C wird der Bereich 27 durch einen Stanzvorgang entfernt. Gemäß diesem Ausführungsbeispiel wird dabei die Spitze 22 des Dichtelements 5 weggestanzt.

In dem Ausführungsbeispiel von Figur 3D wird hingegen der Dichtfuß 20 durch einen Stanzvorgang entfernt. Die Markierung 26 ist in jedem Fall ist einfach und kostengünstig herstellbar und dauerhaft erkennbar.

Die Ausführungsbeispiele haben gemein, dass durch das Entfernen des jeweiligen Bereichs 27 des Dichtelements 5 im Querschnitt des Dichtelements 5 zum Erzeugen der jeweiligen Markierung 26 durch die Prüfeinrichtung 14 die Markierung 26 beziehungsweise das Fehlen des Bereichs 26 an dem Dichtelement 5 deutlich erkennbar ist, sodass der so markierte Längsabschnitt 18 sicher durch die Trenneinrichtung 17 entfernbar ist.

Alternativ zu dem obenstehenden Ausführungsbeispiel von Figur 1 ist die Repariereinrichtung 14 in dem ersten Teil der Anlage 1 verortet, sodass dem zweiten Teil die bereits fertig präparierte Wickelrolle 11 mit einem fehlerstellenfreien Dichtband beziehungsweise Dichtelement 5 zugeführt wird.

### Bezugszeichenliste

- 1: Anlage
- 2: Dichtung
- 3: Tür
- 4: Prüfeinrichtung
- 5: Dichtelement
- 6: Kamera
- 7: Markierungseinrichtung
- 8: Einheit
- 9: Werkzeugeinrichtung
- 10: Sammeleinrichtung
- 11: Wickelrolle
- 12: Applikationseinrichtung
- 13: Roboterarm
- 14: Reparatureinrichtung
- 15: Prüfeinrichtung
- 16: Kameraeinrichtung
- 17: Trenneinrichtung
- 18: Längsabschnitt
- 19: Dichtabschnitt
- 20: Dichtelementfuß
- 21: Haltevorsprung
- 22: Spitze
- 23: Längsseite
- 24: Längsseite
- 25: Ende
- 26: Markierung
- 27: Bereich

## Patentansprüche

1. Verfahren zum Herstellen einer Dichtung (2), insbesondere für eine Tür (3) oder einen Türrahmen eines Kraftfahrzeugs, mit folgenden Schritten:
- Bereitstellen eines strangförmigen, ablängbaren Dichtelements,
- Prüfen des Dichtelements (5) auf Fehlerstellen,
- Markieren jeder erkannten Fehlerstelle an dem Dichtelement (5),
- Entfernen von jedem zumindest eine Markierung (26) aufweisenden Längsabschnitt (18) des Dichtelements (5),
- Ablängen des Dichtelements (5) auf eine gewünschte Länge,
**dadurch gekennzeichnet, dass** zur Markierung (26) der jeweils erkannten Fehlerstelle ein in dem Längsabschnitt des Dichtelements (5), in welchem die jeweilige Fehlerstelle erkannt wurde, liegender Bereich (27) des Dichtelements (5), der im Querschnitt des Dichtelements (5) kleiner als der Querschnitt des Dichtelements (5) ist, entfernt wird.

2. Verfahren nach Anspruch 1, **dadurch gekennzeichnet, dass** der Bereich (27) unabhängig von der jeweils erfassten Fehlerstelle der Bereich (27) mit einer vorgegebenen Mindestgröße entfernt wird.

3. Verfahren nach einem der vorhergehenden Ansprüche, **dadurch gekennzeichnet, dass** unabhängig von der jeweils erfassten Fehlerstelle im Querschnitt des Dichtelements (5) der gleiche Bereich (27) entfernt wird.

4. Verfahren nach einem der vorhergehenden Ansprüche, **dadurch gekennzeichnet, dass** nur der die jeweilige Fehlerstelle aufweisende Bereich (27) des Dichtelements (5) im Querschnitt des Dichtelements (5) entfernt wird.

5. Verfahren nach einem der vorhergehenden Ansprüche, **dadurch gekennzeichnet, dass** der Bereich (27) durch Stanzen entfernt wird.

6. Verfahren nach einem der vorhergehenden Ansprüche, **dadurch gekennzeichnet, dass** der Bereich (27) durch Schneiden entfernt wird.

7. Verfahren nach Anspruch 6, **dadurch gekennzeichnet, dass** der Bereich (27) durch Wasserschneiden, Laserschneiden oder mechanisches Schneiden entfernt wird.

8. Verfahren nach einem der vorhergehenden Ansprüche, **dadurch gekennzeichnet, dass** der Bereich (27) durch einen Bohr- oder Fräsvorgang entfernt wird.

9. Verfahren nach einem der vorhergehenden Ansprüche, **dadurch gekennzeichnet, dass** die durch das Herausschneiden des zumindest eine Markierung (26) aufweisenden Längsabschnitts (18) des Dichtelements (5) verbleibenden freien Enden des Dichtelements (5) miteinander verbunden werden, bevor das Dichtelement (5) abgelängt wird.

10. Anlage (1) zum Herstellen einer Dichtung (2), insbesondere für eine Tür (3) oder einen Türrahmen eines Kraftfahrzeugs, mit einer ersten Prüfeinrichtung (4) zum Erkennen von Fehlerstellen in oder an einem strangförmigen ablängbaren Dichtelement (5) an dem Dichtelement (5), und mit einer Markiereinrichtung (7) zum Markieren jeder erkannten Fehlerstelle des Dichtelements (5) an dem Dichtelement (5), mit einer zweiten Prüfeinrichtung zum Erfassen der jeweiligen Markierung (26) und mit einer Reparatureinrichtung (14) zum Entfernen eines durch eine Markierung (26) versehenen Längsabschnitts des Dichtelements (5), **dadurch gekennzeichnet, dass** die Markiereinrichtung (7) dazu ausgebildet ist, zur Markierung (26) der jeweils erkannten Fehlerstelle einen in dem Längsabschnitt (18) des Dichtelements (5), in welchem die jeweilige Fehlerstelle erkannt wurde, liegenden Bereich (27) des Dichtelements (5), der im Querschnitt des Dichtelements (5) kleiner als der Querschnitt des Dichtelements (5) ist, zu entfernen.

## Claims

1. Method for producing a seal (2), in particular for a door (3) or a door frame of a motor vehicle, comprising the following steps:
- providing a strand-shaped sealing element that can be cut to length,
- inspecting the sealing element (5) for fault locations,
- marking each detected fault location on the sealing element (5),
- removing each longitudinal portion (18) of the sealing element (5), which portion has at least one marking (26),
- cutting the sealing element (5) to a desired length,
**characterized in that,** in order to mark (26) the detected fault location in each case, a region (27) of the sealing element (5) located in the longitudinal portion of the sealing element (5) is removed, in which portion the relevant fault location was detected, which region in the cross section of the sealing element (5) is smaller than the cross section of the sealing element (5).

2. Method according to claim 1, **characterized in that** the region (27) is removed independently of the detected fault location of the region (27) with a predetermined minimum size.

3. Method according to either of the preceding claims, **characterized in that** the same region (27) is removed independently of the detected fault location in the cross section of the sealing element (5).

4. Method according to any of the preceding claims, **characterized in that** only the region (27) of the sealing element (5) which has the relevant fault location in the cross section of the sealing element (5) is removed.

5. Method according to any of the preceding claims, **characterized in that** the region (27) is removed by punching.

6. Method according to any of the preceding claims, **characterized in that** the region (27) is removed by cutting.

7. Method according to claim 6, **characterized in that** the region (27) is removed by water cutting, laser cutting or mechanical cutting.

8. Method according to any of the preceding claims, **characterized in that** the region (27) is removed by a drilling or milling operation.

9. Method according to any of the preceding claims, **characterized in that** the free ends of the sealing element (5) which remain via cutting out the longitudinal portion (18) of the sealing element (5), which portion has at least one marking (26), are connected to one another before the sealing element (5) is cut to length.

10. Plant (1) for producing a seal (2), in particular for a door (3) or a door frame of a motor vehicle, comprising a first inspection device (4) for detecting fault locations in or on a strand-shaped sealing element (5) on the sealing element (5), which element can be cut to length, and comprising a marking device (7) for marking each detected fault location of the sealing element (5) on the sealing element (5), comprising a second inspection device for detecting the relevant marking (26) and comprising a repair device (14) for removing a longitudinal portion of the sealing element (5), which portion is provided with a marking (26), **characterized in that** the marking device (7) is designed, in order to mark (26) the detected fault location in each case, to remove a region (27) of the sealing element (5) located in the longitudinal portion (18) of the sealing element (5), in which portion the relevant fault location was detected, which region in the cross section of the sealing element (5) is smaller than the cross section of the sealing element (5).

## Revendications

1. Procédé de fabrication d'un joint (2), en particulier pour une portière (3) ou un encadrement de portière d'un véhicule automobile, comprenant les étapes suivantes :
- préparation d'un élément d'étanchéité en forme de boudin pouvant être coupé à longueur,
- vérification de l'élément d'étanchéité (5) sur la présence de points de défaut,
- marquage de chaque point de défaut reconnu sur l'élément d'étanchéité (5),
- élimination de chaque section longitudinale (18) de l'élément d'étanchéité (5) présentant au moins un marquage (26),
- découpage à longueur de l'élément d'étanchéité (5) à une longueur souhaitée,
**caractérisé en ce que**, pour le marquage (26) de chaque point de défaut reconnu, une zone (27) de l'élément d'étanchéité (5), se trouvant dans la section longitudinale de l'élément d'étanchéité (5), dans laquelle le point de défaut respectif a été reconnu, qui présente une section transversale de l'élément d'étanchéité (5) inférieure à la section transversale de l'élément d'étanchéité (5), est éliminée.

2. Procédé selon la revendication 1, **caractérisé en ce que** la zone (27) est éliminée indépendamment du point de défaut respectif détecté de la zone (27) avec une taille minimale prédéfinie.

3. Procédé selon l'une quelconque des revendications précédentes, **caractérisé en ce que**, indépendamment du point de défaut respectif détecté, la même zone (27) est éliminée dans la section transversale de l'élément d'étanchéité (5).

4. Procédé selon l'une quelconque des revendications précédentes, **caractérisé en ce que** seule la zone (27) présentant les points de défaut respectifs de l'élément d'étanchéité (5) est éliminée dans la section transversale de l'élément d'étanchéité (5).

5. Procédé selon l'une quelconque des revendications précédentes, **caractérisé en ce que** la zone (27) est éliminée par estampage.

6. Procédé selon l'une quelconque des revendications précédentes, **caractérisé en ce que** la zone (27) est éliminée par découpe.

7. Procédé selon la revendication 6, **caractérisé en ce que** la zone (27) est éliminée par découpe au jet d'eau, découpe au laser ou découpe mécanique.

8. Procédé selon l'une quelconque des revendications précédentes, **caractérisé en ce que** la zone (27) est éliminée par un processus de perçage ou de fraisage.

9. Procédé selon l'une quelconque des revendications précédentes, **caractérisé en ce que** les extrémités libres de l'élément d'étanchéité (5) résultant du découpage de l'au moins une section longitudinale (18) de l'élément d'étanchéité (5) présentant l'au moins un marquage (26) sont reliées l'une à l'autre, avant la coupe de l'élément d'étanchéité (5) à longueur.

10. Installation (1) pour fabriquer un joint (2), en particulier pour une portière (3) ou un encadrement de portière d'un véhicule automobile, comprenant un premier dispositif de vérification (4) pour reconnaître des points de défaut dans ou sur un élément d'étanchéité (5) en forme de boudin pouvant être découpé à longueur sur l'élément d'étanchéité (5) et un dispositif de marquage (7) pour le marquage de chaque point de défaut reconnu de l'élément d'étanchéité (5) sur l'élément d'étanchéité (5), un second dispositif de vérification pour détecter le marquage respectif (26) et un dispositif de réparation (14) pour éliminer une section longitudinale appliquée par un marquage (26) de l'élément d'étanchéité (5), **caractérisée en ce que** le dispositif de marquage (7) est conçu, pour le marquage (26) du point de défaut reconnu respectif, éliminer une zone (27) de l'élément d'étanchéité (5), se trouvant dans la section longitudinale (18) de l'élément d'étanchéité (5), dans laquelle le point de défaut respectif a été reconnu, qui présente une section transversale de l'élément d'étanchéité (5) inférieure à la section transversale de l'élément d'étanchéité (5).
